# EUROPÄISCHE PATENTSCHRIFT

(11) **EP 1 650 855 B1**
(45) Veröffentlichungstag und Bekanntmachung des Hinweises auf die Patenterteilung: **21.03.2007**
(21) Anmeldenummer: 05107390.6
(22) Anmeldetag: 11.08.2005
(51) Int. Cl.: H02K 55/04, F25B 49/02, F25B 23/00, F28D 15/02, F28D 15/04

(54) **Maschineneinrichtung mit einer supraleitenden Erregerwicklung mit Thermosiphon-Kühlung sowie Verfahren zur Kühlung der Wicklung**
Engine assembly with supraconducting induction winding with thermosiphon cooling and cooling process of the winding
Moteur avec bobine d'excitation avec refroidissement thermosyphon et procédé de refroidissement des bobines

(30) Priorität: 20.08.2004 DE 102004040493
(43) Veröffentlichungstag der Anmeldung: 26.04.2006
(73) Patentinhaber: SIEMENS AKTIENGESELLSCHAFT, 80333 München (DE)
(72) Erfinder: Frank, Michael, Dr., 91080 Uttenreuth (DE); Kühn, Adolf, 90552 Röthenbach (DE); van Haßelt, Peter, Dr., 91058 Erlangen (DE)

(56) Entgegenhaltungen:
- WO-A-03/079522
- WO-A-20/04102779
- DE-A1- 10 057 664
- DE-A1- 10 211 363

## Beschreibung

Die Erfindung bezieht sich auf eine Maschineneinrichtung
- mit einem um eine Rotationsachse drehbar gelagerten Rotor, der mindestens eine supraleitende Erregerwicklung aufweist, deren Leiter wärmeleitend an einen zentralen, sich in Achsrichtung erstreckenden zylindrischen Rotorhohlraum angekoppelt sind,
- mit einer außerhalb des Rotors befindlichen, ortsfesten Kälteeinheit mit einem Kondensorraum und
- mit zwischen dem zentralen Rotorhohlraum und dem Kondensorraum der Kälteeinheit verlaufenden, rohrförmigen Leitungsteilen.

Dabei bilden der Rotorhohlraum, die rohrförmigen Leitungsteile und der Kondensorraum ein geschlossenes Ein-Rohr-Leitungssystem, in dem sich ein Kältemittel befindet, wobei unter Ausnutzung eines Thermosiphon-Effektes in dem Kondensorraum kondensiertes Kältemittel über die rohrförmigen Leitungsteile in den zentralen Rotorhohlraum sowie dort verdampfendes Kältemittel zurück über die Leitungsteile zu dem Kondensorraum gelangt.
Die Erfindung betrifft auch ein Verfahren zur Kühlung der Erregerwicklung.
Eine entsprechende Maschineneinrichtung und deren Kühlung gehen aus der DE 100 57 664 A1 hervor.

Seit 1987 kennt man metalloxidische Supraleitermaterialien mit Sprungtemperaturen T_{c} von über 77 K. Diese Materialien werden auch als Hoch(High)-T_{c}-Supraleitermaterialien oder HTS-Materialien bezeichnet. Zur Kühlung von Wicklungen mit solchen HTS-Leitern kommen bevorzugt Kälteanlagen in Form von so genannten Cryokühlern mit geschlossenem He-Druckgaskreislauf zum Einsatz. Solche Cryokühler sind insbesondere vom Typ Gifford-McMahon oder Stirling oder sind als so genannte Pulsröhrenkühler ausgebildet.

Eine entsprechende Kühltechnik ist für den aus der eingangs genannten DE 100 57 664 A1 entnehmbaren Rotor einer elektrischen Maschine vorgesehen. Der Rotor enthält eine rotierende Wicklung aus HTS-Leitern, die sich in einem wärmeleitend ausgebildeten Wicklungsträger befinden. Dieser Wicklungsträger ist mit einem zentralen, sich in Achsrichtung erstreckenden, zylindrischen Rotorhohlraum ausgestattet, an den sich seitlich aus dem Wicklungsträger herausführende, rohrförmige Leitungsteile anschließen. Diese Leitungsteile führen in einen geodätisch höher liegenden Kondensorraum einer Kälteeinheit und bilden zusammen mit diesem Kondensorraum und dem zentralen Rotorhohlraum ein geschlossenes Ein-Rohr-Leitungssystem. In diesem Leitungssystem befindet sich ein Kältemittel, das unter Ausnutzung eines so genannten Thermosiphon-Effektes zirkuliert. Hierbei wird in dem Kondensorraum kondensiertes Kältemittel über die rohrförmigen Leitungsteile in den zentralen Rotorhohlraum geleitet, wo es wegen der thermischen Ankopplung an den Wicklungsträger und damit an die HTS-Wicklung Wärme aufnimmt und teilweise verdampft. Das verdampfte Kältemittel gelangt dann zurück über dieselben Leitungsteile in den Kondensorraum, wo es zurückkondensiert wird. Die hierfür erforderliche Kälteleistung wird von einer Kältemaschine erzeugt, deren Kaltkopf an den Kondensorraum thermisch angekoppelt ist. Der Rückstrom des Kältemittels wird dabei getrieben durch einen leichten Überdruck in dem als Verdampferteil wirkenden zentralen Rotorhohlraum hin zu den als Kondensorraum wirkenden Teilen der Kältemaschine. Dieser durch das Entstehen von Gas im Verdampferteil und das Verflüssigen im Kondensorraum erzeugte Überdruck führt also zu dem gewünschten Kältemittelrückstrom. Entsprechende Kältemittelströmungen sind von so genannten "Heat-Pipes" prinzipiell her bekannt.

Bei der bekannten Maschine mit Thermosiphon-Kühlung mittels einer entsprechenden Kälteeinheit erfolgt also der Transport des Kältemittels allein unter Ausnutzung der Schwerkraft, so dass keine weiteren Pumpsysteme erforderlich sind. Will man eine derartige Maschineneinrichtung auf Schiffen oder Offshore-Einrichtungen einsetzen, so muss vielfach mit statischen Schieflagen, einem so genannten "Trim", von bis zu ±5° und/oder mit dynamischen Schieflagen von bis zu ±7,5° in Längsrichtung gerechnet werden. Das Kühlsystem diesbezüglicher Maschineneinrichtungen muss also auch unter diesen Bedingungen eine sichere Kühlung gewährleisten. Hierbei muss der Gefahr begegnet werden, dass ein Bereich der rohrförmigen Leitungsteile zwischen dem zentralen Rotorhohlraum und der Kälteeinheit geodätisch tiefer zu liegen kommt als der zentrale Rotorhohlraum. Die Folge davon wäre nämlich, dass das Kältemittel unter Einfluss der Schwerkraft den zu kühlenden Rotorhohlraum nicht erreichen kann. Eine Kühlung der Maschine und somit deren Betrieb wäre damit nicht mehr sichergestellt.

Um dieser Gefahr zu begegnen, wurden mehrere Vorschläge gemacht:
- So kann die Maschine gegenüber der Horizontalen so geneigt angeordnet werden, dass auch bei größter anzunehmender Trimlage oder Oszillationsamplitude in dem Thermosiphon-Leitungssystem immer noch ein Gefälle in Richtung auf den Rotorhohlraum vorhanden ist. Eine entsprechend geneigte Anordnung ist gerade im Schiffsbau insbesondere bei größerer Maschinenlänge aus Gründen eines dann erforderlichen großen Platzbedarfs unerwünscht.
- Statt eines Ein-Rohr-Leitungssystems sind auch Zwei-Rohr-Leitungssysteme für eine Kältemittelzirkulation unter Ausnutzung eines Thermosiphon-Effektes bekannt (vgl. z.B. WO 00/13296 A). Hierbei muss jedoch im Bereich einer Hohlwelle des Rotors ein zusätzliches Rohr für das gasförmige Kältemittel vorgesehen werden. Der apparative Aufwand ist dementsprechend gegenüber einem Ein-Rohr-Leitungssystem erhöht.
- Ferner kann das Kältemittel durch eine Pumpanlage zwangsumgewälzt werden. Auch hierfür ist jedoch ein erheblicher apparativer Aufwand erforderlich, insbesondere wenn sich das Kältemittel z.B. auf einer Temperatur von 25 bis 30 K befinden soll. Außerdem bedingen derartige Umwälzanlagen erhebliche thermische Verluste.
- Mit der nicht-vorveröffentlichten DE-Patentanmeldung 103 21 463.1 wird eine Maschineneinrichtung mit den eingangs genannten Merkmalen vorgeschlagen, bei der außerdem Mittel zu einer Druckerhöhung vorgesehen sind, die eine kurzzeitige Pumpwirkung auf das flüssige Kältemittel in Richtung auf den zentralen Rotorhohlraum hin mittels Druckpulsen am gasförmigen Kältemittel hervorrufen. Dabei wird von der Überlegung ausgegangen, dass eine Förderung des Kältemittels in den zentralen Hohlraum nicht unbedingt kontinuierlich erfolgen muss. Aufgrund der thermischen Trägheit des Systems und einer kleinen Vorratsmenge an flüssigem Kühlmittel im Rotorhohlraum genügt es nämlich, wenn eine Nachfüllung des Kältemittels in den Rotorhohlraum in zeitlichen Abständen für eine hinreichend kurze Zeitdauer, d.h. kurzzeitig, erfolgt. Mit Hilfe der nur kurzzeitig wirkenden und beliebig oft wiederholbaren Druckpulse wird so auch bei Schieflagen des Rotors der Maschine eine für eine sichere Kühlung der supraleitenden Erregerwicklung hinreichende Befüllung des zentralen Hohlraums mit flüssigem Kältemittel gewährleistet.

Bei der vorgeschlagenen Maschineneinrichtung können insbesondere noch folgende Maßnahmen im Einzelnen oder auch in Kombination zusätzlich vorgesehen werden:
- So können die Druckerhöhungsmittel vorzugsweise auf den Bereich des Kondensorraums oder der rohrförmigen Leitungsteile einwirken.
- Zur Förderung des flüssigen Kältemittels in den zentralen Rotorhohlraum kann eine permanent pulsierende Druckerhöhung vorgesehen werden.
- Für eine Druckerhöhung kann an den rohrförmigen Leitungsteilen eine auf das flüssige Kältemittel einwirkende Heizvorrichtung angebracht sein, die für das kurzzeitige Pumpen während einer entsprechenden Zeitdauer zu aktivieren ist. Eine Heizung mit hoher Leistungsdichte im Kaltteil, die zudem ein Versagensrisiko in Verbindung mit langen Austauschzeiten mit sich bringt, ist vielfach unerwünscht.
- Statt dessen kann auch ein mit gasförmigem, unter Überdruck stehendem Kältemittel gefülltes Puffervolumen vorgesehen sein, das mit dem Kondensorraum oder den sich daran anschließenden Leitungsteilen über eine das gasförmige Kältemittel fördernde Pumpe zu verbinden ist. Diese Möglichkeit erfordert für ein geschlossenes Thermosiphon-Leitungssystem, dass nach dem Druckpuls der warme Puffer wieder auf den gewünschten Überdruck gebracht wird. Um eine im Mittel konstante Füllmenge zu gewährleisten, scheidet jedoch eine externe Nachfüllung aus. Das bedeutet, dass das Gas aus dem Thermosiphon-Leitungssystem entnommen werden muss, wofür eine Pumpe erforderlich ist. Diese Pumpe muss gegenüber der Umgebung hermetisch abgedichtet sein. Die so an sich passive Kühlung hängt damit von einem verschleißbehafteten Bauteil ab.

Aufgabe der vorliegenden Erfindung ist es deshalb, die Maschineneinrichtung mit den eingangs genannten Merkmalen dahingehend auszubilden, dass eine möglichst ausfallsichere Kühlung der Erregerwicklung zu gewährleisten ist, wobei der Einsatz einer Pumpe oder einer zusätzlichen Heizung vermieden wird.

Diese Aufgabe wird erfindungsgemäß dadurch gelöst,
- dass in den rohrförmigen Leitungsteilen ein mit flüssigem Kältemittel zu füllendes, kaltes Puffervolumen integriert ist,
- dass ein mit gasförmigem, unter Überdruck stehendem Kältemittel gefülltes, warmes Puffervolumen vorgesehen ist, welches über ein steuerbares Ventil an den Kondensorraum oder die sich daran anschließenden Leitungsteile angeschlossen ist,
- dass eine kurzzeitige Pumpwirkung auf das flüssige Kältemittel in Richtung auf den zentralen Rotorhohlraum hin mittels Druckpulsen an gasförmigem Kältemittel durch ein entsprechendes Öffnen des steuerbaren Ventils vorgesehen ist und
- dass Mittel zu einem befristeten Anheben der Temperatur in dem Leitungssystem nach der Pumpwirkung auf ein vorbestimmtes Temperaturniveau über der normalen Betriebstemperatur vorhanden sind.

Die mit dieser Maßnahme verbundenen Vorteile sind insbesondere darin zu sehen, dass auf zusätzliche aktive Komponenten in dem Leitungssystem - abgesehen von einem warmen Ventil - verzichtet werden kann. Es ist somit eine entsprechend hohe Betriebssicherheit zu gewährleisten.

Die Erfindung geht dabei von der Überlegung aus, dass mit einer Anhebung der Temperatur in dem Thermosiphon-Leitungssystem eine derartige Druckerhöhung erzeugt werden kann, dass der mit der Erzeugung der Druckpulse verbundene Druckabfall in dem warmen Puffervolumen wieder rückgängig zu machen ist.

Vorteilhafte Weiterbildungen der Maschineneinrichtung mit den in Anspruch 1 genannten Merkmalen sind aus den abhängigen Ansprüchen zu entnehmen.

So kann ein kaltes Puffervolumen mit einem geringen Rauminhalt von insbesondere unter 1 Liter ausreichen.

Das vorbestimmte, angehobene Temperaturniveau braucht höchstens um 10 K, vorzugsweise höchstens um 5 K, und mindestens um 1 K über der normalen Betriebstemperatur in dem Leitungssystem zu liegen. Eine entsprechende Anhebung des Temperaturniveaus in dem Leitungssystem lässt sich mit einfachen Mitteln bewerkstelligen.

Es sind Mittel zum Anheben des Temperaturniveaus in dem Leitungssystem derart vorzusehen, dass der Siededruck des Kältemittels zumindest annähernd dem ursprünglichen Überdruck in dem warmen Puffervolumen vor dem Öffnen des steuerbaren Ventils entspricht. Der diesbezügliche apparative Aufwand ist gering, da eine entsprechende Temperaturregelung für den Kondensor sowieso vorhanden ist.

Besonders vorteilhaft wird die Kühlung der Erregerwicklung der Maschineneinrichtung nach einem Verfahren betrieben, bei dem
- zur Druckerhöhung das steuerbare Ventil geöffnet wird,
- das Temperaturniveau in dem Leitungssystem derart angehoben wird, dass der Siededruck des Kältemittels dann zumindest weitgehend dem ursprünglichen Überdruck in dem warmen Puffervolumen entspricht,
- beim Erreichen des ursprünglichen Überdruckes in dem warmen Puffervolumen das steuerbare Ventil wieder geschlossen wird und
- das Temperaturniveau in dem Leitungssystem auf die Betriebstemperatur wieder abgesenkt wird.

Das erforderliche Anheben des Temperaturniveaus in dem Leitungssystem um wenige Kelvin ist dabei durch eine entsprechende Auslegung der Erregerwicklung im Allgemeinen ohne weiteres zu tolerieren. Besondere Pumpen zur Rückführung des gasförmigen Kältemittels in das warme Puffervolumen sind hierbei nicht erforderlich.

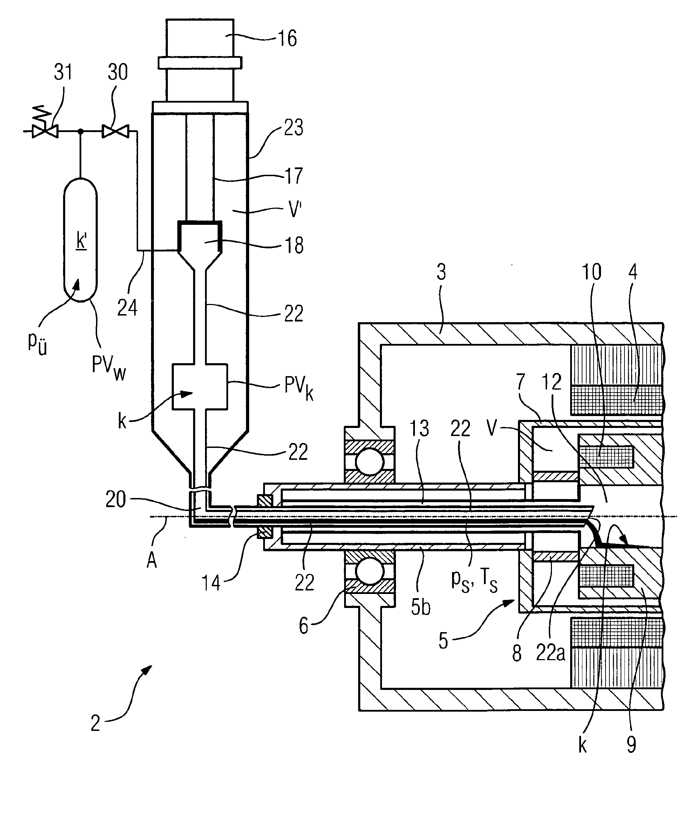

Zur weiteren Erläuterung der Erfindung wird nachfolgend auf die Zeichnung Bezug genommen, anhand derer ein bevorzugtes Ausführungsbeispiel einer Maschineneinrichtung noch weiter beschrieben wird. Dabei zeigt die einzige Figur in einem Längsschnitt eine Ausführungsform der Kälteeinheit für eine Maschine dieser Einrichtung.

Erfindungsgemäße Maschineneinrichtungen umfassen jeweils eine Maschine bzw. einen Motor sowie eine zugeordnete Kälteeinheit. Die Maschine umfasst eine rotierende, supraleitende Wicklung, die prinzipiell eine Verwendung von metallischem LTS-Material (niedrig T_{c}-Supraleitermaterial) oder insbesondere oxidischem HTS-Material gestattet. Die Erregerwicklung der Maschine kann aus einer Spule oder aus einem System von Spulen in einer zwei-, vier- oder sonstigen mehrpoligen Anordnung bestehen. Der prinzipielle Aufbau eines entsprechenden Synchronmotors geht aus der eingangs genannten DE 100 57 664 A1 hervor. Bei den in der Figur nicht ausgeführten Teilen kann es sich insbesondere um die einer Maschine handeln, die mit der nicht-vorveröffentlichten DE-Patentanmeldung 103 21 463.1 vorgeschlagen ist.

In der Figur sind unter anderem bezeichnet mit 2 allgemein die Maschine, mit 3 deren warmes Außengehäuse, mit 4 deren Ständerwicklung, mit 5 deren Rotor, mit 5b ein rohrförmiger Wellenteil des Rotors, mit 6 ein Lager, mit 7 ein Vakuumgefäß des Rotors, mit 8 ein Drehmomentübertragungselement des Rotors, mit 9 ein Wicklungsträger in dem Rotor, mit 10 eine supraleitende Erregerwicklung in dem Wicklungsträger, mit 12 ein zentraler Hohlraum des Rotors für ein Kältemittel, mit 13 ein sich daran seitlich anschließender Hohlraum, mit 14 eine Dichtung, mit 16 ein Kaltkopf einer Kälteeinheit, mit 17 ein Wärmeübertragungskörper dieser Einheit, mit 18 ein Kondensorraum der Einheit , mit 20 allgemein ein Kältemittel-Leitungssystem, mit 22 Leitungsteile zwischen dem Kondensorraum 18 und dem zentralen Hohlraum 12, mit 22a das Ende eines Leitungsrohrs, mit 23 ein Vakuumgefäß der Kälteeinheit, mit 24 eine Verbindungsleitung, mit 30 ein steuerbares Ventil, mit 31 ein Überdruckventil, mit A die Rotationsachse, mit k flüssiges Kältemittel, mit k' gasförmiges Kältemittel, mit V, V' Vakuumräume, mit PV_{w} ein warmes Puffervolumen und mit PVₖ ein kaltes Puffervolumen.

Das Leitungssystem mit dem Kondensorraum 18, dem zentralen Hohlraum 12 und den dazwischen verlaufenden, rohrförmigen Leitungsteilen 22 ist mit einem Kältemittel gefüllt, das je nach gewünschter Betriebstemperatur der HTS-Wicklung ausgewählt wird. Die Zirkulation des Kältemittels erfolgt dabei unter Ausnutzung eines so genannten Thermosiphon-Effekts bei einer normalen Betriebstemperatur Tₛ in dem Leitungssystem 20. Hierbei fließt das im Kondensorraum 18 verflüssigte Kältemittel k durch die Leitungsteile 22 in den zentralen Rotorrohlraum 12, wo es zumindest teilweise unter Aufnahme von Wärme zu dem Kältemittel k' verdampft.

Die Kühleinrichtung der Maschine 2 nach der Erfindung ist erfindungsgemäß so ausgeführt, dass auch ein sicherer Betrieb bei statischen und dynamischen Schieflagen, wie sie bei Anordnung in einem Schiff auftreten können, gewährleistet ist. Hierzu bedarf es keiner besonderen Pumpe, sondern lediglich des zusätzlichen kalten Puffervolumens PVₖ, das in die Leitungsteile 22 zwischen dem Kondensorraum 18 und dem zentralen Rotorhohlraum 12 integriert ist. Dieses Puffervolumen PVₖ kann dabei vorteilhaft verhältnismäßig klein gehalten werden und insbesondere unter einem Liter liegen. Für einen cyclischen Verfahrensablauf, mit dem die Kühlung bei den Schieflagen zu gewährleisten ist, werden vorteilhaft die folgenden Verfahrensschritte vorgesehen:
1.) Im Ausgangszustand ist das warme Puffervolumen PV_{w} mit einem Überdruck p_{ü} an gasförmigem Kältemittel k' befüllt. Dieser (Ausgangs-)Druck ist dabei höher, zum Beispiel um etwa 1 bar, als der normale Betriebsdruck pₛ in dem Leitungssystem 20. Das steuerbare Ventil 30 ist geschlossen.
2.) Es erfolgt ein kontinuierlicher Kältebetrieb mit einer Zirkulation des Kältemittels k, k' nach dem Thermosiphon-Effekt in dem als Ein-Rohr-System ausgebildeten Leitungssystem 20 bei einer vorgegebenen Betriebstemperatur Tₛ und einem Betriebsdruck pₛ.
3.) Während dieses kontinuierlichen Betriebs füllt sich das kalte Puffervolumen PVₖ mit flüssigem Kältemittel k, wobei sich auch in dem zentralen Rotorhohlraum 12 noch flüssiges Kältemittel k befindet.
4.) Zu einem vorgebbaren Zeitpunkt, insbesondere bei einer Schieflage, wird das Ventil 30 für einen kurzen Zeitraum von beispielsweise 1 sec. geöffnet. Der damit verbundene Druckpuls an gasförmigem Kältemittel k' auf das in dem Leitungssystem 20 befindliche Kältemittel k bewirkt eine Förderung von flüssigem Kältemittel k in Richtung auf den zentralen Rotorhohlraum 12 hin.
5.) Nach einem solchen Druckpuls wird die Betriebstemperatur in dem Leitungssystem 20 auf ein Temperaturniveau/einen Wert derart angehoben, dass der Siededruck des Kältemittels in dem Leitungssystem zumindest annähernd, vorteilhaft gerade dem ursprünglichen (Ausgangs-)Druck p_{ü} in dem warmen Pufferbehälter PV_{w} entspricht. Auf diese Weise wird gasförmiges Kältemittel k' wieder zurück in das Puffervolumen PV_{w} gefördert.
6.) Sobald der Druck in dem warmen Puffervolumen PV_{w} wieder auf den Ausgangswert p_{ü} aufgebaut ist, wird das Ventil 30 geschlossen.
7.) Anschließend wird die Temperatur in dem Leitungssystem 20 wieder auf den ursprünglichen Normalwert Tₛ der Betriebstemperatur abgesenkt durch Einbringen der hierfür erforderlichen Kälteleistung der Kälteeinheit.

Zur Umsetzung dieses Verfahrens muss die Erregerwicklung 10 während der Verfahrensschritte 5.) und 6.) bei etwas erhöhter Temperatur betrieben werden können; in der Praxis wird es sich hierbei um unter 10 K, insbesondere unter 5 K, beispielsweise um etwa 3 K, zumindest aber um mehr als 1 K, Temperaturunterschied handeln. Derartige Temperaturunterschiede sind durch entsprechende Auslegung der Erregerwicklung ohne weiteres tolerierbar.

## Patentansprüche

1. Maschineneinrichtung
- mit einem um eine Rotationsachse (A) drehbar gelagerten Rotor (5), der mindestens eine supraleitende Erregerwicklung (10) aufweist, deren Leiter wärmeleitend an einem zentralen, sich in Achsrichtung erstreckenden zylindrischen Rotorhohlraum (12) angekoppelt sind,
- mit einer außerhalb des Rotors (5) befindlichen, ortsfesten Kälteeinheit mit einem Kondensorraum (18)
und
- mit einem zwischen dem zentralen Rotorhohlraum (12) und dem Kondensorraum (18) der Kälteeinheit verlaufenden, rohrförmigen Leitungsteilen (22), wobei der Rotorhohlraum (12), die rohrförmigen Leitungsteile (22) und der Kondensorraum (18) ein geschlossenes Ein-Rohr-Leitungssystem (20) bilden, in dem sich ein Kältemittel (k, k') befindet,
wobei unter Ausnutzung eines Thermosiphon-Effektes in dem Kondensorraum (18) kondensiertes Kältemittel (k) über die rohrförmigen Leitungsteile (22) in den zentralen Rotorhohlraum (12) sowie dort verdampfendes Kältemittel (k') zurück über die Leitungsteile (22) zu dem Kondensorraum (18) gelangt,
**dadurch gekennzeichnet,**
- **dass** in den rohrförmigen Leitungsteilen (22) ein mit flüssigem Kältemittel (k) zu füllendes, kaltes Puffervolumen (PVₖ) integriert ist,
- **dass** ein mit gasförmigem, unter Überdruck (p_{ü}) stehendem Kältemittel (k') gefülltes, warmes Puffervolumen (PV_{w}) vorgesehen ist, welches über ein steuerbares Ventil (30) an den Kondensorraum (18) oder die sich daran anschlie-βenden Leitungsteile (22) angeschlossen ist,
- **dass** eine kurzzeitige Pumpwirkung auf das flüssige Kältemittel (k) in Richtung auf den zentralen Rotorhohlraum (12) hin mittels Druckpulsen am gasförmigen Kältemittel (k') durch ein entsprechendes Öffnen des steuerbaren Ventils (30) vorgesehen ist und
- **dass** Mittel zu einem befristeten Anheben der Temperatur in dem Leitungssystem (20) nach der Pumpwirkung auf ein vorbestimmtes Temperaturniveau über der normalen Betriebstemperatur (Tₛ) vorhanden sind.

2. Maschineneinrichtung nach Anspruch 1, **gekennzeichnet durch** ein kaltes Puffervolumen (PVₖ) mit einem Rauminhalt von unter einem Liter.

3. Maschineneinrichtung nach Anspruch 1 oder 2, **dadurch gekennzeichnet, dass** das vorbestimmte, angehobene Temperaturniveau höchstens 10 K, vorzugsweise höchstens 5 K, und mindestens 1 K über der normalen Betriebstemperatur (Tₛ) in dem Leitungssystem (20) liegt.

4. Maschineneinrichtung nach einem der vorangehenden Ansprüche, **gekennzeichnet durch** Mittel zum Anheben des Temperaturniveaus in dem Leitungssystem (20) derart, dass der Siededruck des Kältemittels zumindest annähernd dem ursprünglichen Überdruck (p_{ü}) in dem warmen Puffervolumen (PVₖ) vor dem Öffnen des steuerbaren Ventils (30) entspricht.

5. Verfahren zur Kühlung der Erregerwicklung der Maschineneinrichtung nach einem der vorangehenden Ansprüche, **dadurch gekennzeichnet,**
• **dass** zur Druckerhöhung das steuerbare Ventil (30) geöffnet wird,
• **dass** das Temperaturniveau in dem Leitungssystem (20) derart angehoben wird, dass der Siededruck des Kältemittels zumindest annähernd dem ursprünglichen Überdruck (p_{ü}) in dem warmen Puffervolumen (PV_{w}) entspricht,
• **dass** bei Erreichen des ursprünglichen Überdrucks (p_{ü}) in dem warmen Puffervolumen (PV_{w}) das steuerbare Ventil (30) wieder geschlossen wird
und
• **dass** danach die Temperatur in dem Leitungssystem (20) auf die Betriebstemperatur (Tₛ) abgesenkt wird.

## Claims

1. Machine device
- having a rotor (5) which is mounted rotatably about a rotation axis (A) and comprises at least one superconducting excitation winding (10), the conductors of which are thermally conductively coupled to a central cylindrical rotor cavity (12) extending in the axial direction,
- having a static refrigeration unit which is arranged outside the rotor (5) and comprises a condenser space (18),
and
- having tubular line parts (22) extending between the central rotor cavity (12) and the condenser space (18) of the refrigeration unit, the rotor cavity (12), the tubular line parts (22) and the condenser space (18) forming a closed one-tube line system (20), in which there is a refrigerant (k, k'),
wherein, by using a thermosiphon effect, refrigerant (k) condensed in the condenser space (18) travels via the tubular line parts (22) into the central rotor cavity (12) and refrigerant (k') evaporating there travels back via the line parts (22) to the condenser space (18),
**characterized**
- **in that** a cold buffer volume (PVₖ), to be filled with liquid refrigerant (k), is integrated into the tubular line parts (22),
- **in that** a warm buffer volume (PV_{w}), filled with a gaseous refrigerant (k') at a positive pressure (p_{ü}), is provided and is connected via a controllable valve (30) to the condenser space (18) or to the line parts (22) connecting therewith,
- **in that** a temporary pumping action on the liquid refrigerant (k) in the direction towards the central cavity (12) is provided by means of pressure pulses on the gaseous refrigerant (k') by correspondingly opening the controllable valve (30) and
- **in that** there are means for short-term elevation of the temperature in the line system (20) after the pumping action to a predetermined temperature level above the normal operating temperature (Tₛ).

2. Machine device according to Claim 1, **characterized by** a cold buffer volume (PVₖ) with a capacity of less than 1 litre.

3. Machine device according to Claim 1 or 2, **characterized in that** the predetermined elevated temperature level is at most 10 K, preferably at most 5 K, and at least 1 K above the normal operating temperature (Tₛ) in the line system (20).

4. Machine device according to one of the preceding claims, **characterized by** means for elevating the temperature level in the line system (20) so that the boiling pressure of the refrigerant corresponds at least approximately to the original positive pressure (p_{ü}) in the warm buffer volume (PVₖ), before the controllable valve (30) is opened.

5. Method for cooling the excitation winding of the machine device according to one of the preceding claims,
**characterized**
• **in that** the controllable valve (30) is opened in order to increase the pressure,
• **in that** the temperature level in the line system (20) is elevated so that the boiling pressure of the refrigerant corresponds at least approximately to the original positive pressure (p_{ü}) in the warm buffer volume (PV_{w}),
• **in that** the controllable valve (30) is closed again upon reaching the original positive pressure (p_{ü}) in the warm buffer volume (PV_{w}),
and
• the temperature in the line system (20) is then lowered to the operating temperature (Tₛ).

## Revendications

1. Moteur
- comprenant un rotor (5) qui est monté tournant autour d'un axe (A) de rotation et qui a au moins un enroulement (10) supraconducteur d'excitation dont les conducteurs sont couplés d'une manière conductrice de la chaleur à un espace (12) creux cylindrique central de rotor s'étendant dans la direction de l'axe ;
- comprenant un groupe frigorifique à poste fixe se trouvant à l'extérieur du rotor (5) et ayant un espace (18) formant condenseur ; et
- comprenant des parties (22) tubulaires de conduit s'étendant entre l'espace (12) creux central de rotor et l'espace (18) formant condenseur du groupe frigorifique, l'espace (12) creux de rotor, les parties (22) tubulaires de conduit et l'espace (18) formant condenseur formant un système (20) de circuit fermé monotubulaire dans lequel se trouve un fluide (k, k') frigorigène,
dans lequel, en tirant parti d'un effet de thermosiphon dans l'espace (18) formant condenseur, du fluide (k) frigorigène condensé arrive par les parties (22) tubulaires de conduit dans l'espace (12) creux central de rotor, tandis que du fluide (k') frigorigène qui s'y est évaporé retourne par les parties (22) de conduit à l'espace (18) formant condenseur,
**caractérisé**
- **en ce qu'**il est intégré dans les parties (22) tubulaires de conduit un volume (PVₖ) tampon froid à remplir de fluide (k) frigorigène liquide ;
- **en ce qu'**il est prévu un volume (PV_{w}) tampon chaud empli d'un fluide (k') frigorifique gazeux en surpression (p_{ü}) qui communique par une vanne (30) pouvant être commandée avec l'espace (18) formant condenseur ou avec les parties (22) de conduit y faisant suite ;
- **en ce qu'**il est prévu un effet de pompage de brève durée sur le fluide (k) frigorifique liquide dans la direction allant vers l'espace (12) creux central de rotor au moyen d'impulsions de pression sur le fluide (k') frigorifique gazeux par une ouverture correspondante de la vanne (30) qui peut être commandée ;
et
- **en ce qu'**il y a des moyens d'élévation dans un délai fixé de la température dans le système (20) de conduit après l'effet de pompage jusqu'à un niveau de température déterminée à l'avance au-delà de la température (Tₛ) de fonctionnement normal.

2. Moteur suivant la revendication 1, **caractérisé par** un volume (PVₖ) tampon froid ayant une contenance inférieure à un litre.

3. Moteur suivant la revendication 1 ou 2, **caractérisé en ce que** le niveau de température surélevé déterminé à l'avance est au plus de 10 K, de préférence au plus de 5 K, et d'au moins 1 K au-dessus de la température (Tₛ) normale de fonctionnement dans le système (20) de conduit.

4. Moteur suivant l'une des revendications précédentes, **caractérisé par** des moyens d'élévation du niveau de la température dans le système (20) de conduit de façon à ce que la pression à l'ébullition du fluide frigorigène corresponde au moins à peu près à la surpression (p_{ü}) d'origine dans le volume (PVₖ) tampon chaud avant l'ouverture de la vanne (30) qui peut être commandée.

5. Procédé de refroidissement de l'enroulement d'excitation du moteur suivant l'une des revendications précédentes, **caractérisé**
• **en ce que**, pour augmenter la pression, on ouvre la vanne (30) qui peut être commandée ;
• **en ce que** l'on élève le niveau de température dans le système (20) de conduit de façon à ce que la pression à l'ébullition du fluide frigorigène corresponde au moins à peu près à la surpression (p_{ü}) d'origine dans le volume (PV_{w}) tampon chaud ;
• **en ce que**, lorsque la surpression (p_{ü}) d'origine est atteinte dans le volume (PV_{w}) tampon chaud, on referme la vanne (30) qui peut être commandée ;
et
• **en ce qu'**ensuite on abaisse la température dans le système (20) de conduit à la température (Tₛ) de fonctionnement.
